# EUROPÄISCHE PATENTSCHRIFT

(11) **EP 1 178 185 B1**
(45) Veröffentlichungstag und Bekanntmachung des Hinweises auf die Patenterteilung: **06.10.2004**
(21) Anmeldenummer: 01710036.3
(22) Anmeldetag: 01.08.2001
(51) Int. Cl.: F01L 1/352, F16H 1/32

(54) **Steuereinrichtung zum Verstellen des Drehwinkels einer Nockenwelle**
Control device for varying camshaft phase
Dispositif variateur de phase d'arbre à cames

(30) Priorität: 05.08.2000 DE 10038354
(43) Veröffentlichungstag der Anmeldung: 06.02.2002
(73) Patentinhaber: AFT Atlas Fahrzeugtechnik GmbH, 58791 Werdohl (DE)
(72) Erfinder: Axmacher, Detlef, 58636 Iserlohn (DE); Neubauer, Dirk, 58769 Nachrodt-Wiblingwerde (DE)
(74) Vertreter: Graf, Ulrich

(56) Entgegenhaltungen:
- DE-A- 2 109 113
- DE-A- 3 910 090
- DE-A- 4 135 378
- DE-A- 4 210 038
- US-A- 5 361 736
- PATENT ABSTRACTS OF JAPAN vol. 010, no. 040 (M-454), 18. Februar 1986 (1986-02-18) & JP 60 192152 A (BUICHI NAKAMURA), 30. September 1985 (1985-09-30)

## Beschreibung

Die Erfindung betrifft eine Steuereinrichtung zum Verstellen des Drehwinkels einer Nockenwelle gegenüber dem Drehwinkel einer Kurbelwelle, wie sie beispielsweise aus der DE 41 35 378 bekannt ist.

Bei Brennkraftmaschinen treibt die Kurbelwelle über einen Primärtrieb, der beispielsweise als Kette, Zahnriemen, Königswelle oder als eine Folge von Zahnrädern ausgebildet ist, eine oder mehrere Nockenwellen an. Dazu ist an jeder Nockenwelle ein Nockenwellenrad befestigt, über welches der Primärtrieb die Nockenwelle antreibt, und das entsprechend dem Primärtrieb, beispielsweise als Riemenscheibe oder als Kettenrad, ausgebildet ist. Dabei erfolgt grundsätzlich eine Übersetzung des Drehwinkels der Kurbelwelle, wobei 720° Kurbelwellendrehwinkel in 360° Nockenwellendrehwinkel umgesetzt werden.

Zur Gewährleistung eines präzisen Ablaufes des Arbeitsspiels der Brennkraftmaschine und zur Einhaltung der für eine exakte Verbrennung notwendigen Steuerzeiten sind Kurbelwelle, Primärtrieb und Nockenwelle mit sehr geringen Toleranzen gefertigt.

Dabei ist es vorteilhaft das feste Verhältnis zwischen der Kurbelwelle und den Nokkenwellen, beispielsweise zur drehzahlabhängigen Anpassung der Steuerzeiten des Ventilspiels, zu lösen, und die Nockenwelle gegenüber der Kurbelwelle vorlaufen oder nachlaufen zu lassen. Dies erfolgt in einfacher Weise mittels einer Steuereinrichtung, welche die Nockenwelle relativ gegenüber dem Nockenwellenrad verdreht. Dementsprechend werden die Brennräume der Brennkraftmaschine im Arbeitsspiel bei der Drehung der Nockenwelle durch die Ventile früher oder später geöffnet und geschlossen. Dadurch entsteht die Möglichkeit die Laufkultur der Brennkraftmaschine weiter zu verbessern, wodurch Kraftstoff eingespart und vor allem die Abgasemissionen reduziert werden.

Eine derartige Steuereinrichtung ist aus der gattungsbildenden DE 41 35 378 bekannt. Dabei wird die Nockenwelle einer Brennkraftmaschine gegenüber der Kurbelwelle mittels einer hydraulischen Steuereinrichtung verdreht. Die hydraulische Steuereinrichtung umfaßt eine Taumelscheibenpumpe, welche den benötigten Hydraulikdruck zum Verdrehen der Nockenwelle aufbringt.

Der Nachteil einer hydraulischen Steuereinrichtung besteht in dem umfangreichen Bauraum der Pumpenanordnung und des hydraulischen Kammersystems, in der Störanfälligkeit der Anordnung und in den relativ hohen Herstellungskosten.

Die US 5 361 736 beschreibt ein System zur Variation der Steuerzeiten einzelner Ventile einer Brennkraftmaschine. Dieses sehr aufwändige System umfasst je Nockenwelle mindestens ein Differential zur Verstellung des Drehwinkels des Nockens und eine Vorrichtung zur Regelung der Größe der Drehwinkelverstellung.

Der Nachteil dieses Systems ist der komplizierte und raumbeanspruchende Aufbau und die hohen Herstellungskosten.

Der Erfindung liegt die Aufgabe zugrunde, ein Steuereinrichtung zum Verstellen des Drehwinkels der Nockenwelle gegenüber dem Drehwinkel der Kurbelwelle anzugeben, die einen geringen Bauraum beansprucht, kostengünstig herzustellen ist und eine hohe Betriebssicherheit aufweist.

Diese Aufgabe wird erfindungsgemäß durch das Merkmal im Kennzeichen des Patentanspruchs 1 gelöst, wonach zwischen der Nockenwelle und der Kurbelwelle ein die Verstellung bewirkendes Taumelscheibengetriebe angeordnet ist.

Dabei sind bei einer Brennkraftmaschine Nockenwelle und Kurbelwelle über einen Primärtrieb miteinander verbunden, wobei der Primartrieb die Nockenwelle über ein mit der Nockenwelle verbundenes Nockenwellenrad antreibt. Das Taumelscheibengetriebe ist dabei zwischen dem Nockenwellenrad und der Nockenwelle angeordnet.

An einer Seite des Taumelscheibengetriebes ist eine Taumelscheibe angebracht, Auf dieser Seit ist zudem eine die Taumelscheibe antreibende Stelleinrichtung angeordnet.

In einer weiteren Weiterbildung der Erfindung ist vorgesehen, daß die Taumelscheibe auf der der Stelleinrichtung entgegengesetzten Seite zwei umlaufende Zahnkränze aufweist. Dabei greift der erste Zahnkranz der Taumelscheibe in einen auf das Nockenwellenrad wirkenden Zahnkranz, und der zweite Zahnkranz der Taumelscheibe greift in einen auf die Nockenwelle wirkenden Zahnkranz.

In einer alternativen Weiterbildung der Erfindung ist vorgesehen, daß auf beiden Seiten der Taumelscheibe jeweils ein umlaufender Zahnkranz angeordnet ist. Dabei greift der Zahnkranz einer Seite der Taumelscheibe in einen auf das Nockenwellenrad wirkenden Zahnkranz. Der auf der anderen Seite der Taumelscheibe ausgebildete Zahnkranz greift in einen auf die Nockenwelle wirkenden Zahnkranz.

Die Verschiebung des Drehwinkels der Nockenwelle gegenüber dem Nockenwellenrad resultiert daher, daß die ineinander greifenden Zahnkränze der Taumelscheibe und des Nockenwellenrades und/oder die ineinander greifenden Zahnkränze der Taumelscheibe und der Nockenwelle eine unterschiedliche Zahnzahl aufweisen.

Dabei weist die Taumelscheibe gegenüber der Nockenwelle einen axialen Stellwinkel auf. Dadurch wird bewirkt, daß die Zahnkränze der Taumelscheibe von lediglich einem Winkelsegment in die Zahnkränze der Nockenwelle und des Nockenwellenrades greifen. Die Größe des Winkelsegmentes, innerhalb dem die Zahnkränze ineinander greifen, ist von dem axialen Stellwinkel der Taumelscheibe gegenüber der Nockenwelle abhängig.

Bei einer besonders einfachen Ausführung der Erfindung ist vorgesehen, daß die Stelleinrichtung die die Zahnkränze tragende Taumelscheibe direkt antreibt.

In einer alternativen, etwas komplexeren Ausführung der Erfindung ist vorgesehen, daß die Stelleinrichtung eine weitere Taumelscheibe direkt antreibt, und die weitere Taumelscheibe die Taumelbewegung über gleitend gelagerte Schubstangen an die die Zahnkränze tragende Taumelscheibe überträgt.

Als Begrenzung der Verstellung der Nockenwelle gegenüber der Kurbelwelle sind Mittel vorgesehen, die das maximale Verdrehen der Nockenwelle von ± 40 Grad bewirken.

In einer letzten Weiterbildung der Erfindung sind Mittel vorgesehen, die bei einem Ausfall der Stellvorrichtung eine Verstellung der Nockenwelle gegenüber der Kurbelwelle von 0 Grad bewirken.

Im folgenden soll die erfindungsgemäße Steuereinrichtung zum Verstellen des Drehwinkels der Nockenwelle gegenüber dem Drehwinkel der Kurbelwelle mit vier unterschiedlichen Ausführungsbeispielen im Zusammenhang mit vier Figuren beschrieben und erläutert.

Es zeigen:
- Figur 1: ein Schnittbild durch eine einfach Ausgeführte, als Taumelscheibengetriebe ausgebildete Steuereinrichtung, bei der beide Zahnkränze auf einer Seite der Taumelscheibe angeordnet sind,
- Figur 2: ein Schnittbild einer alternativen Ausführung der als Taumelscheibengetriebe ausgebildeten Steuereinrichtung bei der auf jeder Seite der Taumelscheibe ein Zahnkranz angeordnet ist,
- Figur 3: ein Schnittbild einer weiteren alternativen Ausführung der als Taumelscheibengetriebe ausgebildete Steuereinrichtung,
- Figur 4: das Schnittbild durch einer alternativen Ausführung der als Taumelscheibengetriebe ausgebildeten Steuereinrichtung zum Verdrehen der Nockenwelle gegenüber dem Nockenwellenrad.

Die Funktionsweise eines einfachen Taumelscheibengetriebes beruht darauf, daß eine auf der Antriebswelle einer Stelleinheit angeordnete Taumelscheibe gegenüber dieser Antriebswelle einen axialen Stellwinkel aufweist, und dabei drehbar auf der Antriebswelle angeordnet ist.

Dabei weist die Taumelscheibe vorzugsweise zwei Zahnkränze auf, die jeweils in einen Zahnkranz einer Welle (oder eines Rades) greifen, wodurch zwei miteinander verzahnte Zahnkranzpaare gebildet werden. Durch den axialen Stellwinkel greifen lediglich die Zähne eines Winkelsegmentes der Zahnkranzpaare ineinander. Die Größe des Winkelsegmentes, innerhalb dem die Zahnkranzpaare miteinander verzahnt sind, ist von dem axialen Stellwinkel der Taumelscheibe gegenüber der Antriebswelle der Stelleinheit abhängig.

Die Drehung der Antriebswelle der Stelleinheit führt zur Taumeldrehung der Taumelscheibe, wobei bei einer Taumelumdrehung das mit den Wellen verzahnte Winkelsegment der Taumelscheibe eine 360 Grad Drehung ausführt. Die Drehung der Taumelscheibe selbst hängt davon ab, wie die Wellen angetrieben werden.

Bei mindestens einem der Zahnkranzpaare weisen die zwei ineinander greifenden Zahnkränze eine unterschiedliche Zahnzahl auf. Diese unterschiedliche Zahnzahl führt dazu, daß bei der Taumeldrehung der Taumelscheibe zwischen den Zahnkränzen ein Versatz entsteht, wobei nach einer Taumelumdrehung der Taumelscheibe der Versatz dem Winkelabschnitt entspricht, den die den Unterschied in der Zahnzahl bildenden Zähnen einnehmen.

Weist beispielsweise die Taumelscheibe einen Zahnkranz doppelter Breite mit 50 Zähnen auf, der in einen ersten Zahnkranz einer ersten Welle mit ebenfalls 50 Zähnen greift, und der in einen zweiten Zahnkranz einer zweiten Welle mit 51 Zähnen greift, so führt eine Taumelumdrehung der Taumelscheibe zu einem Versatz zwischen der ersten Welle (sowie der Stelleinheit und der Antriebswelle) und der zweiten Welle von genau einem Zahn (= 7.2 Grad). Entsprechend beträgt der Versatz zwischen der ersten Welle und der zweiten Welle nach 50 Taumelumdrehungen der Taumelscheibe eine volle Umdrehung, d.h. die Übersetzung zwischen der ersten Welle und der zweiten Welle, bzw. zwischen der Stelleinheit der Taumelscheibe und der zweiten Welle, beträgt im beschriebenen Fall 50 : 1.

Ist die Stelleinheit der Taumelscheibe in Ruhe, so stützt sich ein über die erste Welle eingeleitetes Drehmoment über die verzahnten Zahnkranzpaare der Wellen und der Taumelscheibe an der zweiten Welle ab.

Ein derartiges Taumelscheibengetriebe kann sehr vorteilhaft zur Beeinflussung der Steuerzeiten beim Ventilspiel einer Brennkraftmaschine verwendet werden, wobei die Steuerzeiten durch die Position der Nocken einer Nockenwelle 1 festgelegt werden, die beispielsweise über ein Nockenwellenrad 2 angetrieben wird.

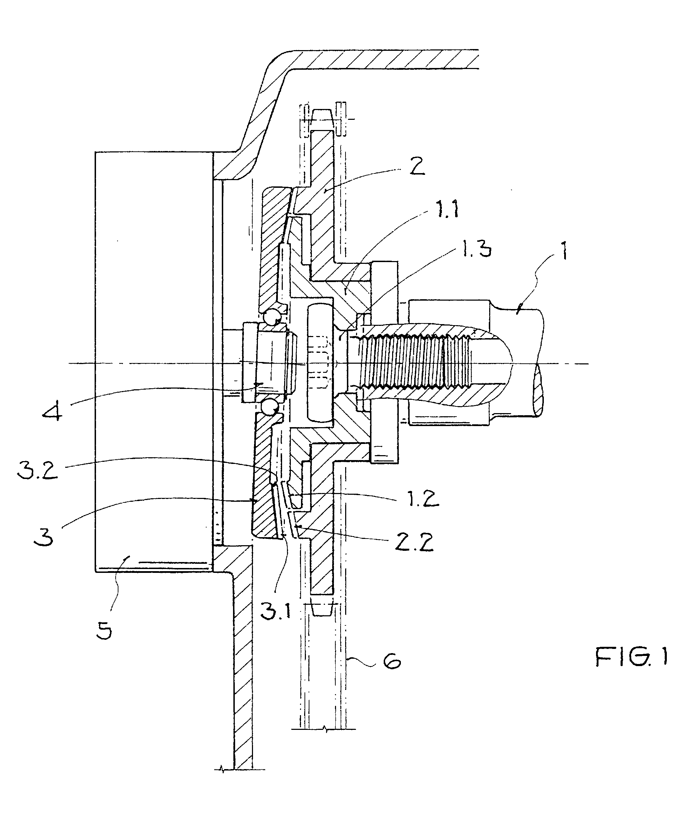

In der Figur 1 ist in einem Schnittbild ein die Nockenwelle 1 und das Nockenwellenrad 2 verbindendes Taumelscheibengetriebe dargestellt, wobei das Nockenwellenrad 2 über eine als Steuerkette ausgelegten Primärtrieb 6 mit der Kurbelwelle der Brennkraftmaschine verbunden ist.

Bei dieser sehr kompakten Variante weist die Taumelscheibe 3 auf der der Nockenwelle 1 und dem Nockenwellenrad 2 zugewandten Seite ein in doppelter Breite ausgeführten Zahnkranz 3.1 auf.

Dieser Zahnkranz 3.1 der Taumelscheibe 3 greift in einen auf das Nockenwellenrad 2 wirkenden Zahnkranz 2.2, der direkt am Nockenwellenrad 2 ausgebildet ist.

Zudem greift der Zahnkranz 3.1 der Taumelscheibe 3 in einen auf die Nockenwelle 1 wirkenden Zahnkranz 1.2. Dieser auf die Nockenwelle 1 wirkende Zahnkranz 1.2 ist als separates Bauteil 1.1 ausgeführt und ist beispielsweise mittels einer Schraube 1.3 mit der Nockenwelle 1 verbunden.

Aufgrund der höheren Reibung zwischen den Zahnkränzen mit der unterschiedlichen Zahnzahl ist es in diesem Ausführungsbeispiels vorteilhaft, den äußeren, eine größere Fläche aufweisenden Zahnkranz des Nockenwellenrades die zur Taumelscheibe unterschiedliche Zahnzahl zuzuordnen.

Auf der dem Zahnkranz 3.1 entgegengesetzten Seite der Taumelscheibe 3 ist eine die Taumelscheibe 3 antreibende Stellvorrichtung 5 angeordnet, die vorzugsweise als Elektromotor ausgebildet ist, die aber auch durch eine Hydraulik oder einen mechanischen, von der Brennkraftmaschine ausgehenden, Antrieb realisiert werden kann.

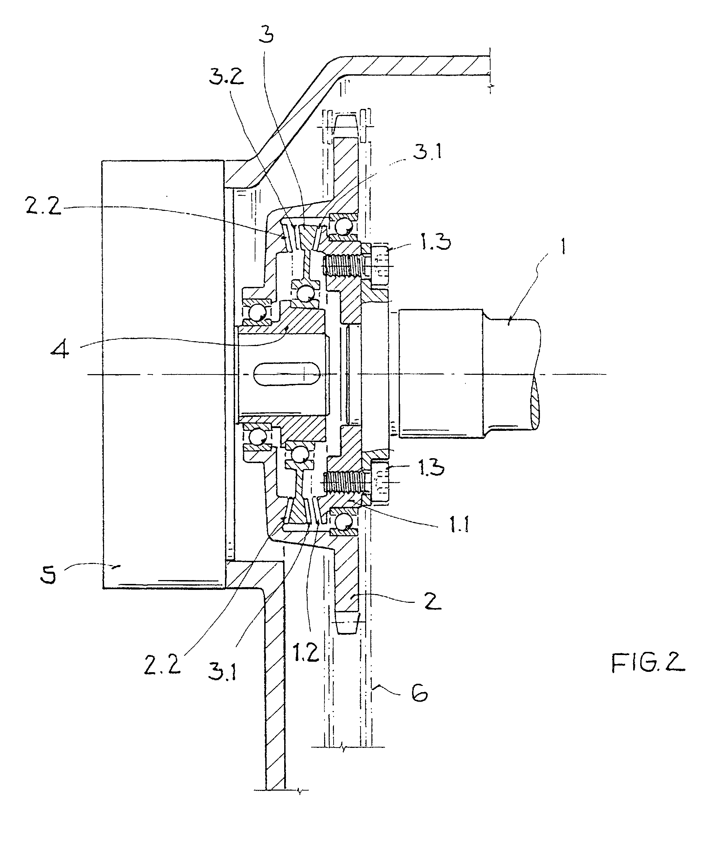

In der Figur 2 ist in einem Schnittbild eine alternative Ausführung eines die Nockenwelle 1 und das Nockenwellenrad 2 verbindenden Taumelscheibengetriebes dargestellt. Dabei ist auf einer Seite der Taumelscheibe 3 ein Zahnkranz 3.2 zum verbinden des Zahnkranzes 2.2 des Nockenwellenrades 2, und auf der anderen Seite der Taumelscheibe 3 ein Zahnkranz 3.1 zum verbinden des Zahnkranzes 1.2 der Nokkenwelle ausgebildet. Die Zahnkränze 1.2, 2.2, 3.1, 3.2 weisen den selben Durchmesser auf, wobei es beliebig ist, welche zwei Zahnkränze die unterschiedliche Zahnzahl aufweisen.

Der Zahnkranz 1.2 der Nockenwelle 1 ist wieder an einem separat gefertigten Bauteil 1.1 ausgebildet, welchen über Schrauben 1.3 mit der Nockenwelle verbunden ist. Dazu ist die Nockenwelle 1 mit einem entsprechendem Anschlußstück zum anschrauben des Formteils 1.1 ausgebildet.

Beim Drehen der Antriebswelle 4 durch die Stelleinrichtung 5 führt die kugelgelagerte Taumelscheibe 3 die Taumeldrehung aus, wobei die Nockenwelle 1 gegenüber dem Nockenwellenrad 2 entsprechend dem durch die Zahnzahl der Zahnkränze 1.2, 2.2, 3.2, 3.3 bestimmten Übersetzungsverhältnis verdreht wird.

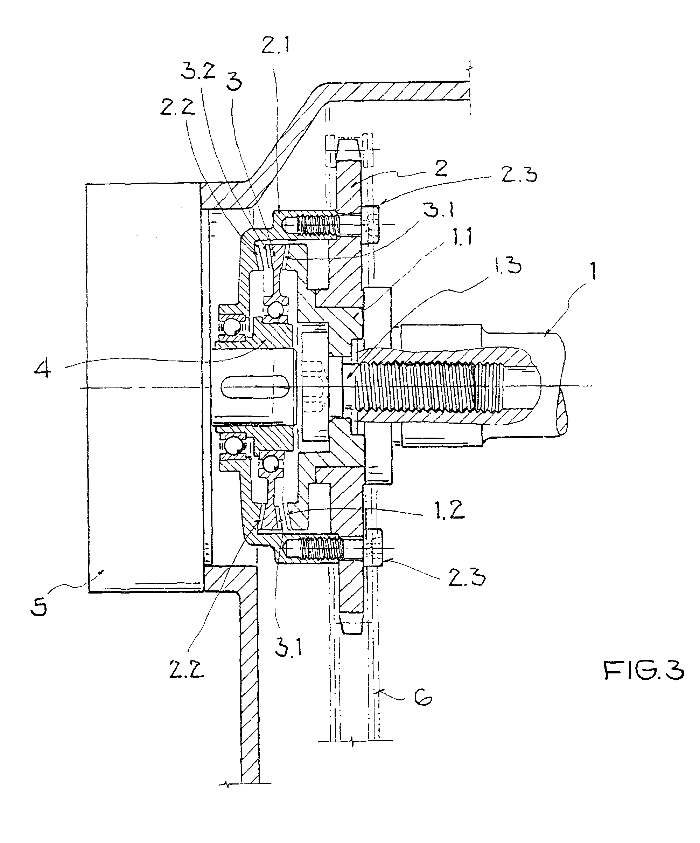

In der Figur 3 ist eine weitere alternative Ausführung eines die Nockenwelle 1 und das Nockenwellenrad 2 verbindenden Taumelscheibengetriebes dargestellt. Dabei ist im Unterschied zur Figur 2 der Zahnkranz 2.2 des Nockenwellenrades 2 als separates Bauteil ausgeführt, welches über Schrauben 2.3 mit dem Nockenwellenrad 2 verschraubt ist. Das den Zahnkranz 1.2 tragende separate Bauteil 1.1 der Nockenwelle 1 ist über die Schraube 1.3 mit der Nockenwelle 1 verbunden.

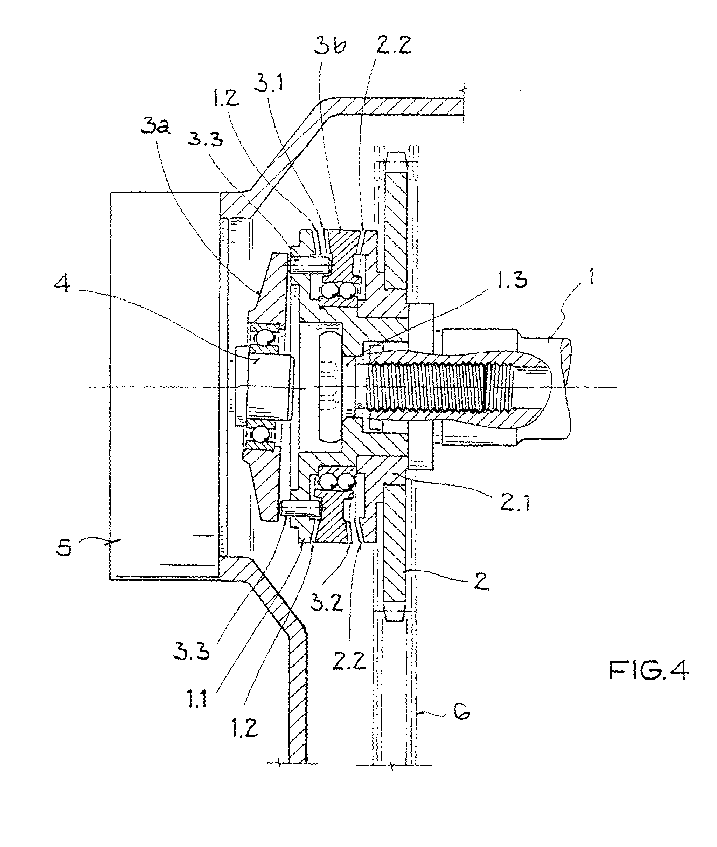

In der Figur 4 ist eine alternative Ausführung eines die Nockenwelle 1 und das Nokkenwellenrad 2 verbindenden Taumelscheibengetriebes dargestellt, bei der die von der Taumelscheibe zu erfüllenden Funktionen auf ein erste Taumelscheibe 3a und ein zweite Taumelscheibe 3b aufgeteilt sind.

Die Taumelscheibe 3a ist auf der Antriebswelle 4 der Stelleinheit 5 angeordnet und weist keine Zahnkränze auf. Die Taumelscheibe 3b dient damit der Verdrehung der Nockenwelle 1 und des Nockenwellenrades 2.

Die Taumelscheibe 3b weist die Zahnkränze 3.1 und 3.2 auf und ist derart auf einem Kugellager schwimmend montiert, daß die Taumelscheibe 3b gegenüber der Achse der Nockenwelle um mehrere Grad gekippt werden kann, ohne daß sich der fiktive Mittelpunkt der Taumelscheibe 3b axial verschiebt. Dadurch dient die Taumelscheibe 3b der Verbindung der Nockenwelle 1 und dem Nockenwellenrad 2.

Bei der Rotation der Nockenwelle 1 würde sich die Taumelscheibe 3b aufgrund von Fliehkräften zwischen dem Zahnkranz 1.2 der Nockenwelle 1 und dem Zahnkranz 2.2 des Nockenwellenrades 2 ausrichten. Über Schubstangen 3.3 zwingt jedoch die Taumelscheibe 3a die Taumelscheibe 3b in die Position, in der die Taumelscheibe 3b die Nockenwelle 1 und das Nockenwellenrad 2 miteinander verbindet, und in der die Nockenwelle 1 und das Nockenwellenrad 2 durch die Stelleinheit 5 gegeneinander verdreht werden können.

Die in den Figuren 1 bis 4 dargestellten Ausführung der Erfindung ermöglichen grundsätzlich das beliebige verdrehen der Nockenwelle 1 gegenüber dem Nockenwellenrad 2 und damit gegenüber der Kurbelwelle der Brennkraftmaschine. Zur Beeinflussung der Steuerzeiten beim Ventilspiel der Brennkraftmaschine ist jedoch lediglich ein verdrehen der Nockenwelle 1 gegenüber dem Nockenwellenrad 2 von ± 40 Grad sinnvoll. Dabei es sinnvoll das Taumelscheibengetriebe mit einer Vorrichtung zu versehen, die als verdrehen der Nockenwelle 1 gegenüber dem Nockenwellenrad 2 begrenzt.

Zur präzisen Regelung der hauptsächlich drehzahlabhängig einzustellenden Steuerzeiten der Brennkraftmaschine sind die Nockenwelle 1 und Kurbelwelle der Brennkraftmaschine oder das Nockenwellenrad 2 mit einer Sensorvorrichtung ausgestattet, welche die Ist - Position der Nockenwelle 1 gegenüber der Ist - Position des Nockenwellenrades 2 sensiert, und die Signale an ein dem Taumelscheibengetriebe zugeordnetes, die Stelleinheit regelndes Steuergerät weiterleitet. Dabei kann das Steuergerät die Ist - und Soll - Positionen der Nockenwelle 1 und des Nockenwellenrades 2 miteinander vergleichen und im Fall von Abweichungen entsprechende Korrekturwerte zur Ansteuerung der Stelleinheit bestimmen. Die Sensorvorrichtung kann dabei vorteilhaft durch berührungsfrei arbeitende Hallsensoren realisiert werden.

Darüber hinaus ist es sinnvoll eine Vorrichtung vorzusehen, die bei einem Ausfall der Antriebseinheit 5 der Taumelscheibe 3 gewährleistet die Nockenwelle 1 und Nokkenwellenrad 2 in eine 0 Grad gegeneinander verdrehte Position zu bringen. Dabei wird die Brennkraftmaschine ohne drehzahlabhängige Anpassung der Steuerzeiten weiter betrieben.

Der Ausfall der Antriebseinheit 5 kann dabei durch Auswertung der Sensorsignale der Sensorvorrichtung erkannt werden.

Sollte es nicht möglich sein Nockenwelle 1 und Nockenwellenrad 2 in eine 0 Grad gegeneinander verdrehte Position zu bringen, werden Kraftstoffeinspritzung und Zündung entsprechend der Verdrehung der Nockenwelle zur Gewährleistung von Notlaufeigenschaften angepaßt

Durch die als Taumelscheibengetriebe ausgebildete Steuereinrichtung zum Verstellen des Drehwinkels der Nockenwelle gegenüber dem Drehwinkel einer Kurbelwelle beansprucht besonders in der Ausführung der Figur 1 einen geringen Bauraum, ist dabei kostengünstig herzustellen und weist durch die realisierbaren Notlaufeigenschaften eine hohe Betriebssicherheit auf.

## Patentansprüche

1. Steuereinrichtung zum Verstellen des Drehwinkels einer Nockenwelle (1) gegenüber dem Drehwinkel einer Kurbelwelle mittels eines Taumelscheibengetriebes, welches eine Taumelscheibe (3) aufweist wobei die Nockenwelle (1) und die Kurbelwelle über einen Primärtrieb (6) miteinander verbunden sind und der Primartrieb (6) die Nockenwelle (1) über ein mit der Nockenwelle (1) verbundenes Nockenwellenrad (2) antreibt, **dadurch gekennzeichnet, daß** das die Verstellung bewirkende Taumelscheibengetriebe zwischen dem Nockenwellenrad (2) und der Nockenwelle (1) angeordnet ist.

2. Steuereinrichtung nach Anspruch 1 , **dadurch gekennzeichnet, daß** die Taumelscheibe an einer Seite des Taumelscheibengetriebes (3) angebracht ist, und daß auf dieser Seite eine die Taumelscheibe (3) antreibende Stelleinrichtung (5) angeordnet ist.

3. Steuereinrichtung nach Anspruch 2, **dadurch gekennzeichnet, daß** die Taumelscheibe (3) auf der der Stelleinrichtung (5) entgegengesetzten Seite zwei umlaufende Zahnkränze (3.1,3.2) aufweist, und daß der erste Zahnkranz (3.1) der Taumelscheibe (3) in einen auf das Nockenwellenrad (2) wirkenden Zahnkranz (2.2) greift, und daß der zweite Zahnkranz (3.2) der Taumelscheibe (3) in einem auf die Nockenwelle (1) wirkenden Zahnkranz (1.2) greift.

4. Steuereinrichtung nach einem der Ansprüche 1 oder 2, **dadurch gekennzeichnet, daß** auf beiden Seiten der Taumelscheibe (3) jeweils ein umlaufender Zahnkranz (3.1,3.2) angeordnet ist, und daß der Zahnkranz (3.1) einer Seite der Taumelscheibe (3) in einen auf das Nockenwellenrad (2) wirkenden Zahnkranz (2.2) greift, und daß der Zahnkranz (3.2) der anderen Seite der Taumelscheibe (3) in einen auf die Nockenwelle (1) wirkenden Zahnkranz (1.2) greift.

5. Steuereinrichtung nach Anspruch 3 oder 4, **dadurch gekennzeichnet, daß** die ineinander greifenden Zahnkränze (2.2, 3.1) der Taumelscheibe (3) und des Nockenwellenrades (2) und/oder die ineinander greifenden Zahnkränze (1.2 ,3.2) der Taumelscheibe (3) und der Nockenwelle (1) eine unterschiedliche Zahnzahl aufweisen.

6. Steuereinrichtung nach einem der vorangegangenen Ansprüche, **dadurch gekennzeichnet, daß** die Taumelscheibe (3) gegenüber der Nockenwelle (1) einen axialen Stellwinkel aufweist, wodurch die Zahnkränze (3.1,3.2) der Taumelscheibe (3) lediglich eines Winkelsegmentes in die Zahnkränze (1.2, 2.2) der Nockenwelle (1) und des Nockenwellenrades (2) greifen, und daß die Größe des Winkelsegmentes von dem axialen Stellwinkel der Taumelscheibe (3) gegenüber der Nockenwelle (1) abhängig ist.

7. Steuereinrichtung nach einem der Ansprüche 4 bis 6, **dadurch gekennzeichnet, daß** die Stelleinrichtung die die Zahnkränze (3.1,3.2) tragende Taumelscheibe (3) direkt antreibt.

8. Steuereinrichtung nach einem der Ansprüche 4 bis 6, **dadurch gekennzeichnet, daß** die Stelleinrichtung eine weitere Taumelscheibe (3a) direkt antreibt, und die weitere Taumelscheibe (3a) die Taumelbewegung über Stehbolzen an die die Zahnkränze (3.1,3.2) tragende Taumelscheibe (3b) überträgt.

9. Steuereinrichtung nach einem der vorangegangenen Ansprüche, **dadurch gekennzeichnet, daß** Mittel vorgesehen sind, die eine Verstellung der Nockenwelle (1) von maximal ± 40 Grad bewirken.

10. Steuereinrichtung nach Anspruch 9, **dadurch gekennzeichnet, daß** Mittel vorgesehen sind, die bei einem Ausfall der Stellvorrichtung eine Verstellung der Nockenwelle (1) gegenüber der Kurbelwelle von 0 Grad bewirken.

## Claims

1. Control device for adjusting the rotation angle of a camshaft (1) relative to the rotation angle of a crankshaft by means of a wobble plate mechanism, which comprises a wobble plate (3), wherein the camshaft (1) and the crankshaft are connected to one another by a primary drive (6) and the primary drive (6) drives the camshaft (1) via a camshaft gear wheel (2) connected to the camshaft (1), **characterized in that** the wobble plate mechanism effecting the adjustment is disposed between the camshaft gear wheel (2) and the camshaft (1).

2. Control device according to claim 1, **characterized in that** the wobble plate is provided at one side of the wobble plate mechanism (3), and that on this side an adjusting device (5), which drives the wobble plate (3), is disposed.

3. Control device according to claim 2, **characterized in that** the wobble plate (3) on the opposite side to the adjusting device (5) has two circumferential ring gears (3.1, 3.2), and that the first ring gear (3.1) of the wobble plate (3) meshes into a ring gear (2.2) acting upon the camshaft gear wheel (2), and that the second ring gear (3.2) of the wobble plate (3) meshes into a ring gear (1.2) acting upon the camshaft (1).

4. Control device according to one of claims 1 or 2, **characterized in that** a circumferential ring gear (3.1, 3.2) is disposed on each side of the wobble plate (3), and that the ring gear (3.1) of one side of the wobble plate (3) meshes into a ring gear (2.2) acting upon the camshaft gear wheel (2), and that the ring gear (3.2) of the other side of the wobble plate (3) meshes into a ring gear (1.2) acting upon the camshaft (1).

5. Control device according to claim 3 or 4, **characterized in that** the intermeshing ring gears (2.2, 3.1) of the wobble plate (3) and of the camshaft gear wheel (2) and/or the intermeshing ring gears (1.2, 3.2) of the wobble plate (3) and of the camshaft (1) have a different tooth number.

6. Control device according to one of the preceding claims, **characterized in that** the wobble plate (3) has an axial setting angle relative to the camshaft (1), with the result that the ring gears (3.1, 3.2) of the wobble plate (3) only of an angular segment mesh into the ring gears (1.2, 2.2) of the camshaft (1) and of the camshaft gear wheel (2), and that the size of the angular segment is dependent upon the axial setting angle of the wobble plate (3) relative to the camshaft (1).

7. Control device according to one of claims 4 to 6, **characterized in that** the adjusting device directly drives the wobble plate (3) carrying the ring gears (3.1, 3.2).

8. Control device according to one of claims 4 to 6, **characterized in that** the adjusting device directly drives a further wobble plate (3a), and the further wobble plate (3a) transmits the wobbling via stud bolts to the wobble plate (3b) carrying the ring gears (3.1, 3.2).

9. Control device according to one of the preceding claims, **characterized in that** means are provided, which effect an adjustment of the camshaft (1) of at most ± 40 degrees.

10. Control device according to claim 9, **characterized in that** means are provided, which in the event of failure of the adjusting apparatus effect an adjustment of the camshaft (1) relative to the crankshaft of 0 degrees.

## Revendications

1. Dispositif de commande pour ajuster l'angle de rotation d'un arbre à cames (1) par rapport à l'angle de rotation d'un vilebrequin au moyen d'une transmission à plateau oscillant laquelle présente un plateau oscillant (3), dans lequel l'arbre à cames (1) et le vilebrequin sont reliés entre eux via un entraînement primaire (6) et dans lequel l'entraînement primaire (6) entraîne l'arbre à cames (1) via une roue d'arbre à cames (2) reliée à l'arbre à cames (1), **caractérisé en ce que** la transmission à plateau oscillant qui assure le réglage est agencée entre la roue d'arbre à cames (2) et l'arbre à cames (1).

2. Dispositif de commande selon la revendication 1, **caractérisé en ce que** le plateau oscillant (3) est monté sur un côté de la transmission à plateau oscillant et **en ce qu'**un dispositif de positionnement (5) entraînant le plateau oscillant (3) est agencé sur ce côté.

3. Dispositif de commande selon la revendication 2, **caractérisé en ce que** :
- le plateau oscillant (3) présente deux couronnes dentées circonférentielles (3.1, 3.2) sur le côté opposé au dispositif de positionnement (5) ;
- la première couronne dentée (3.1) du plateau oscillant (3) s'engage dans une couronne dentée (2.2) qui agit sur la roue d'arbre à cames (2) ; et
- la seconde couronne dentée (3.2) du plateau oscillant (3) s'engage dans une couronne dentée (1.2) qui agit sur l'arbre à cames (1).

4. Dispositif de commande selon l'une ou l'autre des revendications 1 et 2, **caractérisé en ce que** :
- une couronne dentée circonférentielle respective (3.1, 3.2) est agencée sur les deux côtés du plateau oscillant (3) ;
- la couronne dentée (3.1) sur un côté du plateau oscillant (3) s'engage dans une couronne dentée (2.2) qui agit sur la roue d'arbre à cames (2) ; et
- la couronne dentée (3.2) sur l'autre côté du plateau oscillant (3) s'engage dans une couronne dentée (1.2) qui agit sur l'arbre à cames (1).

5. Dispositif de commande selon l'une ou l'autre des revendications 3 et 4, **caractérisé en ce que** les couronnes dentées (2.2, 3.1) du plateau oscillant (3) et de la roue d'arbre à cames (2) s'engageant l'une dans l'autre, et/ou les couronnes dentées (1.2, 3.2) du plateau oscillant (3) et de l'arbre à cames (1) s'engageant l'une dans l'autre, présentent un nombre de dents différent.

6. Dispositif de commande selon l'une des revendications précédentes, **caractérisé en ce que** le plateau oscillant (3) présente un angle de positionnement axial par rapport à l'arbre à cames (1), en raison de quoi les couronnes dentées (3.1, 3.2) du plateau oscillant (3) s'engagent dans les couronnes dentées (1.2, 2.2) de l'arbre à cames (1) et de la roue d'arbre à cames (2) seulement sur un segment angulaire, et **en ce que** la dimension du segment angulaire dépend de l'angle de positionnement axial du plateau oscillant (3) par rapport à l'arbre à cames (1).

7. Dispositif de commande selon l'une des revendications 4 à 6, **caractérisé en ce que** le dispositif de positionnement entraîne directement le plateau oscillant (3) qui porte les couronnes dentées (3.1, 3.2).

8. Dispositif de commande selon l'une des revendications 4 à 6, **caractérisé en ce que** le dispositif de positionnement entraîne directement un autre plateau oscillant (3a) et **en ce que** l'autre plateau oscillant (3a) transmet le mouvement d'oscillation au plateau oscillant (3b) qui porte les couronnes dentées (3.1, 3.2), via des goujons dressés.

9. Dispositif de commande selon l'une des revendications précédentes, **caractérisé en ce qu'**il est prévu des moyens qui assurent un ajustement de l'arbre à cames (1) de ± 40 degrés au maximum.

10. Dispositif de commande selon la revendication 9, **caractérisé en ce qu'**il est prévu des moyens qui assurent un ajustement de l'arbre à cames (1) de 0 degré par rapport au vilebrequin lors d'une défaillance du dispositif de positionnement.
